# EUROPÄISCHE PATENTSCHRIFT

(11) **EP 2 398 691 B1**
(45) Veröffentlichungstag und Bekanntmachung des Hinweises auf die Patenterteilung: **03.07.2013**
(21) Anmeldenummer: 10711831.7
(22) Anmeldetag: 19.02.2010
(51) Int. Cl.: B62D 55/10

(54) **RAUPENFAHRZEUG**
TRACKED VEHICLE
VÉHICULE CHENILLÉ

(30) Priorität: 19.02.2009 DE 102009010991
(43) Veröffentlichungstag der Anmeldung: 28.12.2011
(73) Patentinhaber: Kässbohrer Geländefahrzeug AG, 88471 Laupheim (DE)
(72) Erfinder: JUNGINGER, Bernd, 89134 Blaustein (DE); SCHOCKE, Bernd, 89192 Rammingen (DE)
(74) Vertreter: Patentanwälte Ruff, Wilhelm, Beier, Dauster & Partner
(86) Internationale Anmeldenummer: PCT/EP2010/001043
(87) Internationale Veröffentlichungsnummer: WO 2010/094493

(56) Entgegenhaltungen:
- WO-A1-2008/046646
- DE-A1- 3 036 403
- US-A- 4 191 431
- US-A- 5 755 495

## Beschreibung

Die Erfindung betrifft ein Raupenfahrzeug, insbesondere zum Präparieren von Skipisten, mit einem Kettenantrieb mit zwei in einer Fahrzeugquerrichtung beabstandet angeordneten geschlossenen Ketten, die jeweils mindestens ein umlaufendes Kettenband aufweisen, an dem eine Vielzahl von Kettenstegen vorgesehen sind und die jeweils an einem ersten Ende um ein Antriebsrad und an einem zweiten Ende um ein Führungsrad geführt sind. Dabei ist an einem Chassis des Raupenfahrzeugs für jede Kette mindestens eine Führungsschiene vorgesehen, über die die Gewichtskraft des Raupenfahrzeugs in im Bodenkontakt befindliche Kettenstege der Kette eingeleitet wird. Weiterhin ist dabei zumindest ein Teil der Kettenstege mit drehbar gelagerten Rollkörpern ausgebildet, die zum Abrollen an der Führungsschiene angeordnet und ausgebildet sind.

Gattungsgemäße Raupenfahrzeuge stellen eine Alternative zu dem weit verbreiteten Typ von Raupenfahrzeugen dar, bei denen die Gewichtskraft des Fahrzeugs über zusätzliche Räder zwischen dem Antriebsrad und dem Führungsrad in die Ketten und weiter in den Boden eingeleitet wird.

Die Aufgabe dieser zusätzlichen Räder übernehmen bei gattungsgemäßen Kettenfahrzeugen die Führungsschienen, von denen eine oder mehrere je Kette vorgesehen sind. Solche Raupenfahrzeuge mit Führungsschienen sind aus der WO 2008/046646 A1 bekannt. Aus der genannten Schrift ist es ebenfalls bekannt, an den Kettenstegen Rollkörper vorzusehen, die der Gewichtskrafteinleitung in die Kettenstege dienen und die die Reibung zwischen den Führungsschienen und den Kettenstegen verringern. Ebenfalls in der genannten Schrift ist eine Weiterbildung hierzu beschrieben, bei der an einem Kettensteg mehrere Rollkörper vorgesehen sind, die um voneinander beabstandete Achsen drehbar gelagert sind. Diese Kettenstege mit mehreren Rollkörpern sind von Vorteil, da sie zu einer klar definierten Ausrichtung des Kettenstegs während des Bodenkontakts führen und die Gefahr eines Einknickens des Kettenstegs um eine Fahrzeugquerachse vermindern.

Als verbesserungsbedürftig an den Raupenfahrzeugen, die aus dem Stand der Technik bekannt sind, werden die Reibungsverhältnisse zwischen den Kettenstegen und den Führungsschienen angesehen. Als verbesserungsbedürftig wird auch die Krafteinleitung in die Kette am Antriebsrad sowie die Ausrichtungsstabilität der im Bodenkontakt befindlichen Kettenstege angesehen.

### Aufgabe und Lösung

Aufgabe der Erfindung ist es, ein gattungsgemäßes Raupenfahrzeug insbesondere hinsichtlich der genannten verbesserungsbedürftigen Aspekte zu verbessern.

Erfindungsgemäß wird dies dadurch erreicht, dass mindestens ein Kettensteg einer ersten Art und mindestens ein Kettensteg einer zweiten Art vorgesehen sind, wobei sich der Kettensteg der ersten Art und der Kettensteg der zweiten Art voneinander dadurch unterscheiden, dass der Kettensteg der ersten Art eine von dem Kettensteg der zweiten Art abweichende Zahl von Rollkörpern mit voneinander beabstandeten Drehachsen aufweist und/oder dass der Kettensteg der ersten Art eine Tragvorrichtung mit mindestens zwei Rollkörpern aufweist, die sich in Erstreckungsrichtung der Kette über eine Länge erstreckt, die größer als der Abstand benachbarter Kettenstege zueinander ist, wobei der Kettensteg der zweiten Art eine solche Tragvorrichtung nicht aufweist.

Ein erfindungsgemäßes Raupenfahrzeug weist demnach mindestens zwei Ketten auf, deren jeweilige Hauptbestandteile einerseits mindestens ein Kettenband und andererseits eine Vielzahl von daran angebrachten Kettenstegen sind. Als Kettenstege werden im Sinne dieser Erfindung isoliert am Kettenband festgelegte Einheiten verstanden, die zumindest einen für den Bodenkontakt vorgesehenen Bodenabschnitt aufweisen. Zumindest die Kettenstege mit Rollkörpern weisen zudem eine Tragvorrichtung auf, an der der mindestens eine Rollkörper gelagert ist. Die Rollkörper rollen während der Fahrt bestimmungsgemäß an den Führungsschienen ab, wenn die jeweiligen Kettenstege sich in Bodenkontakt befinden. Die Führungsschienen selbst sind in weitgehend ortsfester Relativlage am Chassis des Fahrzeugs angebracht, wobei jedoch vorgesehen sein kann, dass zwischen dem Chassis und den Führungsschienen Dämpfungs- oder Federelemente für eine begrenzte Auslenkbarkeit der Führungsschienen vorgesehen sind.

Die Besonderheit bei dem erfindungsgemäßen Raupenfahrzeug liegt darin, dass mindestens zwei unterschiedliche Arten von Kettenstegen Anwendung finden. Diese Kettenstege können hinsichtlich ihres Bodenabschnitts identisch ausgebildet sein, sie unterscheiden sich jedoch im Hinblick auf die Anzahl, die Gestaltung und/oder die Anordnung der Rollkörper.

Die Verwendung unterschiedlicher Kettenstege bietet den Vorteil, dass Kettenstege der ersten Art Außenmaße aufweisen können, die so bemessen sind, dass eine Gestaltung der Ketten mit ausschließlich solchen Kettenstegen der ersten Art nicht möglich wäre. Durch die Gestaltung mit unterschiedlichen Kettenstegen können neben solchen Kettenstegen mit großen Abmessungen auch Kettenstege mit kleineren Abmessungen verwendet werden, so dass die größeren Kettenstege sich bis in die Nähe der kleineren Kettenstege erstrecken können. Die größeren Kettenstege können somit beispielsweise eine Gestaltung aufweisen können, die besondere Vorteile beispielsweise in Hinsicht auf die Stabilität des Kettenstegs bieten.

Die Möglichkeit, die Kettenstege der ersten Art mit besonders großen Abmessungen gestalten zu können, erlaubt es insbesondere, an den Kettenstegen der ersten Art jeweils eine Tragvorrichtung für die mindestens zwei Rollkörper mit voneinander beabstandeten Drehachsen vorzusehen. Die Größe der Tragvorrichtung gestattet eine besonders große Beabstandung der Drehachsen der Rollkörper, die in etwa so groß wie oder größer als die Beabstandung der Kettenstege zueinander sein kann. Dieser große Abstand der Drehachsen der Rollkörper eines Kettensteges zueinander führt zu einem sehr hohen Maß an Stabilität gegen Verkippen, da die Mantelflächen der beiden Rollkörper an der Führungsschiene erheblich voneinander beabstandet abrollen. Vorzugsweise ist an den Kettenstegen der ersten Art und den Kettenstegen der zweiten Art eine voneinander abweichende Zahl von Rollkörpern vorgesehen. So kann insbesondere der Kettensteg der ersten Art wie oben beschrieben zwei Rollkörper aufweisen, während der Kettensteg der zweiten Art nur einen einzigen Rollkörper aufweist, der als einzelner Rollkörper primär die Aufgabe übernimmt, die Reibung an der Führungsschiene zu vermindern. Eine abweichende Zahl von Rollkörpern ist auch gegeben, wenn der Kettensteg der zweiten Art keinen Rollkörper aufweist. Er kann stattdessen eine Kontaktfläche aufweisen, beispielsweise als Teil eines Spurbügels, die im Betrieb an der Führungsschiene entlanggleitet. Ebenso ist es möglich, die Kettenstege der zweiten Art so zu gestalten, dass sie keinerlei Abschnitte aufweisen, die bestimmungsgemäß mit der Führungsschiene in Kontakt kommen. In einem solchen Falle erfolgt die Einleitung der Gewichtskraft in die Kettenstege nur an den Kettenstegen der ersten Art, während die Kettenstege der zweiten Art nur hinsichtlich des Vortriebs des Raupenfahrzeugs Wirkung entfalten.

Bei einer Weiterbildung der Erfindung sind die Kettenstege der ersten Art und die Kettenstege der zweiten Art in einer wiederkehrenden Reihenfolge angeordnet. Bevorzugt ist es dabei, dass jeweils ein Kettensteg der ersten Art und ein Kettensteg der zweiten Art im Wechsel vorgesehen sind, so dass umlaufend um die Kette Kettenstege der ersten und der zweiten Art abwechselnd angeordnet sind. Diese Gestaltung erlaubt es insbesondere, die Kettenstege der ersten Art in Erstreckungsrichtung der Kette sowohl nach vorne als auch nach hinten bis in den Bereich eines kleineren Kettenstegs der zweiten Art erstreckt auszubilden. Es sind jedoch auch alternative Gestaltungen denkbar, bei denen beispielsweise ein Kettensteg der zweiten Art auf jeweils zwei, drei oder vier Kettenstege der ersten Art folgt oder aber ein Kettensteg der ersten Art auf jeweils zwei, drei oder vier Kettenstege der zweiten Art folgt.

Besonders bevorzugt ist es, wenn Kontaktbereiche an den Kettenstegen, die bei Bodenkontakt der Kettenstege in Richtung der Führungsschiene weisen, bei Kettenstegen der ersten Art weiter von dem Kettenband beabstandet sind als bei Kettenstegen der zweiten Art.

Unter den Kontaktbereichen werden dabei jene Flächen eines Kettenstegs verstanden, die bei Bodenkontakt des Kettenstegs unterhalb der Führungsschiene angeordnet sind, ungeachtet der Frage, ob sie tatsächlich in Kontakt mit den Führungsschienen kommen. Bei Kettenstegen mit Rollkörpern bildet eine Mantelfläche des Rollkörpers diesen Kontaktbereich. Bei Kettenstegen ohne Rollkörper bildet eine obere Abschlussfläche des Kettenstegs, insbesondere eine Fläche an einem Spurbügel des Kettenstegs, diesen Kontaktbereich. Durch das Zurücksetzen der Kontaktbereiche an den Kettenstegen der zweiten Art gegenüber den Kettenstegen der ersten Art wird erreicht, dass die Gewichtskraft primär über die Kettenstege der ersten Art in den Boden eingeleitet wird. Dies ist insbesondere bei solchen Gestaltungen von Vorteil, bei denen an den Kettenstegen der zweiten Art keine Rollkörper vorgesehen sind, da in einem solchen Fall durch die geringere Beabstandung des Kontaktbereichs vom Kettenband die Flächenpressung an den Kettenstegen der zweiten Art verringert wird und damit auch die Reibung zwischen den Führungsschienen und den Kontaktbereichen der Kettenstege der zweiten Art vermindert wird. Bei ausreichender Zurücksetzung kann sogar der Berührkontakt im Betrieb vermieden werden, so dass die Reibung an den Kettenstegen der zweiten Art dadurch vollständig entfällt. Als vorteilhaft wird es angesehen, wenn die Kontaktbereiche an den Kettenstegen der zweiten Art mindestens um 15 mm weniger, vorzugsweise um 25 mm weniger, von dem Kettenband beabstandet sind als die Kontaktbereiche an den Kettenstegen der ersten Art.

An den Kettenstegen der zweiten Art sind vorzugsweise Funktionsabschnitte vorgesehen. Diese können derart ausgebildet und angeordnet sein, dass sie gemeinsam mit der Führungsschiene eine Seitenführung für den jeweiligen Kettensteg bewirken. Zusätzlich oder alternativ können die Funktionsabschnitte dafür ausgebildet sein, unterhalb der Führungsschiene an dieser entlang zu gleiten und dabei der Einleitung der Gewichtskraft des Fahrzeugs in die Kette zu dienen.

Die genannten Funktionsabschnitte sind starr am Kettensteg vorgesehen und dabei vorzugsweise als separater Spurbügel ausgebildet, der mit dem Bodenabschnitt des Kettenstegs oder einem Gegenabschnitt des Bodenabschnitts beispielsweise durch eine Schraubverbindung verbunden sind. Diese Funktionsabschnitte können zum Zwecke der Seitenführung als zwei in Fahrzeugquerrichtung entsprechend der Breite der Führungsschienen voneinander beabstandete Erhebungen ausgebildet sein. Zwischen diesen Erhebungen kann ein weiterer Funktionsabschnitt vorgesehen sein, der den Kontaktbereich des Kettenstegs bildet. Dieser Kontaktbereich ist vorzugsweise eben ausgebildet, um eine möglichst großflächige Einleitung der Gewichtskraft des Fahrzeugs in den Kettensteg der zweiten Art zu gewährleisten und dadurch die Flächenpressung gering zu halten.

Bei einer Weiterbildung der Erfindung sind an zumindest einem Teil der Kettenstege je Kettensteg mindestens zwei Rollkörper vorgesehen, deren Drehachsen voneinander beabstandet sind, wobei der Abstand der Drehachsen derart an den Abstand von Zahnlücken des Antriebsrades angepasst ist, dass die beiden Rollkörper eines solchen Kettenstegs beim Umlauf des Kettenstegs um das Antriebsrad gleichzeitig in unterschiedlichen Zahnlücken des Antriebsrades angeordnet sind.

Eine solche Gestaltung ermöglicht es, weit voneinander beabstandete Rollkörper in einfacher Weise um das als Zahnrad ausgebildete Antriebsrad herumzuführen. Da die mindestens zwei Rollkörper nicht in einer gemeinsamen Zahnlücke des Antriebsrades vorgesehen sind, ist ihre maximale Beabstandung nicht durch die Breite der Zahnlücken des Antriebsrades begrenzt. Stattdessen können die Rollkörper so beabstandet sein, dass sie gleichzeitig in benachbarten Zahnlücken des Antriebsrades aufgenommen werden können oder sogar in zwei Zahnlücken aufgenommen werden können, zwischen denen eine oder mehrere weitere Zahnlücken frei verbleiben.

Die Anordnung der Rollkörper innerhalb der Zahnlücken beim Umlauf um das Antriebsrad ist nicht zwingend damit verbunden, dass die Rollkörper selbst auch in Kontakt mit dem Antriebsrad gelangen. Es ist bereits von Vorteil, wenn die Rollkörper beim Umlaufen des Antriebsrads jeweils mindestens teilweise innerhalb der Zahnlücken angeordnet sind.

Es wird allerdings bevorzugt, wenn die Kettenstege mit drehbar gelagerten Rollkörpern derart gestaltet und auf das Antriebsrad angepasst sind, dass beim Umlaufen dieser Kettenstege mit Rollkörpern um das Antriebsrad nur die Rollkörper dieser Kettenstege in Berührkontakt mit dem Antriebsrad gelangen. Die Krafteinleitung erfolgt in einem solchen Falle somit nur über die Rollkörper. Dabei sind die Rollkörper in der Lage, an den Zahnflanken des Antriebsrades abzurollen und somit auch hier die Reibung zu verringern. Bei einer solchen Gestaltung weisen die Rollkörper vorzugsweise eine Breite in Fabrzeugquerrichtung auf, die die Breite der Zahnlücken im Bereich des Antriebsrades übersteigt. Die Lagerung dieser Rollkörper erfolgt vorzugsweise durch beidseitig des jeweiligen Rollkörpers vorgesehene Lagerungen am Kettensteg oder durch starre Achsen, die sich durch die Rollkörper hindurch erstrecken und an denen die Rollkörper gelagert sind.

Bei einer Gestaltung, bei der nur die Rollkörper in Kontakt mit dem Antriebsrad gelangen, füllen die Rollkörper die Zahnlücken vorzugsweise möglichst vollständig aus. Es wird daher als bevorzugt angesehen, wenn der Durchmesser der Rollkörper zwischen 70% und 100% des Abstandes zweier eine Zahnlücke definierender Zahnflanken des Antriebsrades auf Höhe des Teilkreisdurchmessers des Antriebsrades beträgt. Insbesondere ist der Durchmesser des Rollkörpers vorzugsweise so groß, dass dieser gleichzeitig an den sich gegenüberliegenden Zahnflanken anliegen kann.

Bei einer Weiterbildung der Erfindung sind die Kettenstege mit mindestens zwei Rollkörpern von benachbarten Kettenstegen ohne Rollkörper oder mit nur einem Rollkörper derart beabstandet, dass neben den beiden Rollkörpern beim Umlauf eines Kettenstegs mit mindestens zwei Rollkörpern um das Antriebsrad gleichzeitig auch ein fest an dem benachbarten Kettensteg angeordneter Funktionsabschnitt oder ein Rollkörper dieses benachbarten Kettenstegs in einer weiteren Zahnlücke des Antriebsrades angeordnet ist.

Bei dieser Gestaltung erfolgt die Krafteinleitung vom Antriebsrad in die Kette somit nur zum Teil über die Kettenstege mit mindestens zwei Rollkörpern in unterschiedlichen Zahnlücken. Darüber hinaus erfolgt die Krafteinleitung auch an dazwischenliegenden Kettenstegen, die ihrerseits keinen Rollkörper oder nur einen Rollkörper aufweisen. Auch diese einfacheren Kettenstege dienen somit der Kraftaufnahme, sind dabei allerdings in jeweils nur einer einzelnen Zahnlücke angeordnet.

Bei einer Weiterbildung der Erfindung weisen die Kettenstege mit einem drehbar gelagerten Rollkörper in Form eines Auflagerollkörpers zum Abrollen an einer Unterseite der Führungsschiene zusätzliche Seitenführungsrollkörper auf, die bei Kontakt des jeweiligen Auflagerollkörpers mit der Führungsschiene seitlich der Führungsschiene angeordnet sind und als Seitenführungsmittel der Kette wirken.

Bei dieser Gestaltung wird somit die Seitenführung der Kettenstege an den Führungsschienen nicht durch starr am Kettensteg festgelegte Abschnitte bewirkt, sondern durch gegenüber einer am Kettensteg vorgesehenen Lagerung drehbaren Seitenführungsrollkörpern.

Im einfachsten Falle können diese Seitenführungsrollkörper um eine in Fahrzeugquerrichtung ausgerichtete Drehachse drehbar am Kettensteg gelagert sein. Dabei ist es bevorzugt, dass es sich um dieselbe Drehachse handelt, um die auch der zwischen den Seitenführungsrollkörpern angeordnete Auflagerollkörper drehbar ist. Der Unterschied zwischen dem Auflagerollkörper und den Seitenführungsrollkörpern liegt in einem solchen Fall primär im Durchmesser der Rollkörper. Die Seitenführungsrollkörper weisen einen größeren Durchmesser auf, um die Führungsschiene in Fahrzeugquerrichtung seitlich zu umgreifen. Bei einer Gestaltung mit einer gemeinsamen Drehachse können die Seitenführungsrollkörper mit dem Auflagerollkörper auch drehfest verbunden sein, so dass sie sich stets gemeinsam miteinander bewegen. Als Weiterbildung dessen kann auch vorgesehen sein, dass die Auflagerollkörper und die Seitenführungsrollkörper als gemeinsamer Rollkörper mit Auflageabschnitt und Seitenführungsabschnitt vorgesehen sind, wobei wiederum die Seitenführungsabschnitte einen gegenüber dem Auflageabschnitt vergrößerten Durchmesser aufweisen.

Alternativ zu einer koaxialen Gestaltung von Auflagerollkörper und Seitenführungsrollkörpern ist es jedoch auch möglich, die Seitenführungsrollkörper um jeweils eigene Drehachsen drehbar zu gestalten, wobei diese Drehachsen gegenüber der Drehachse des Auflagerollkörpers angewinkelt sein können, so dass sie bei Bodenkontakt des jeweiligen Kettenstegs mit der Fahrzeugquerachse einen Winkel von größer als 20° und mit der Fahrzeughochachse einen Winkel von weniger als 70° einschließen.

Die beschriebenen Gestaltungen dienen insbesondere der erhöhten Knickstabilität der Kettenstege. Die erhöhte Stabilität gestattet es, die Kettenstege voneinander weit zu beabstanden, beispielsweise um etwa 200 mm oder mehr voneinander zu beabstanden, ohne dass dies zu verschlechterten Fahreigenschaften oder einem geringeren Fahrkomfort führt. Dieser sehr große Abstand der Kettenstege zueinander führt dazu, dass die Kettenstege auch mit einem vergrößerten Abstand in den Untergrund, insbesondere also in eine Skipiste, eindringen und somit den Untergrund in geringerem Maße beschädigen. Dies führt gleichzeitig auch zu einer Verbesserung der Fahreigenschaften, insbesondere der Steigfähigkeit des Fahrzeugs, da durch ein nur in geringem Maße beschädigten Untergrund auch die Vortriebseigenschaften des Raupenfahrzeugs verbessert werden.

### Kurzbeschreibung der Zeichnungen

Weitere Aspekte und Vorteile der Erfindung ergeben sich außer aus den Ansprüchen auch aus der nachfolgenden Beschreibung eines bevorzugten Ausführungsbeispiels der Erfindung. Dieses ist anhand der Figuren erläutert. Dabei zeigen:
- Fig. 1: ein erfindungsgemäßes Raupenfahrzeug in einer Seitenansicht,
- Fig. 2: einen vergrößerten Abschnitt des Kettenlaufwerks des Raupenfahrzeugs der Fig. 1 in einer Seitenansicht,
- Fig. 3: den Abschnitt des Kettenlaufwerks der Fig. 2 in einer Draufsicht,
- Fig. 4: den Abschnitt des Kettenlaufwerks der Fig. 2 und 3 in einer perspektivischen Ansicht,
- Fig. 5a bis 5c: einen Kettensteg einer ersten Art des Kettenlaufwerks der Fig. 1 bis 4,
- Fig. 6: eine Rollkörpertragvorrichtung des Kettenstegs der Fig. 5a bis 5c und
- Fig. 7a bis 7c: einen Kettensteg einer zweiten Art des Kettenlaufwerks der Fig. 1 bis 4.

### Detaillierte Beschreibung der Ausführungsbeispiele

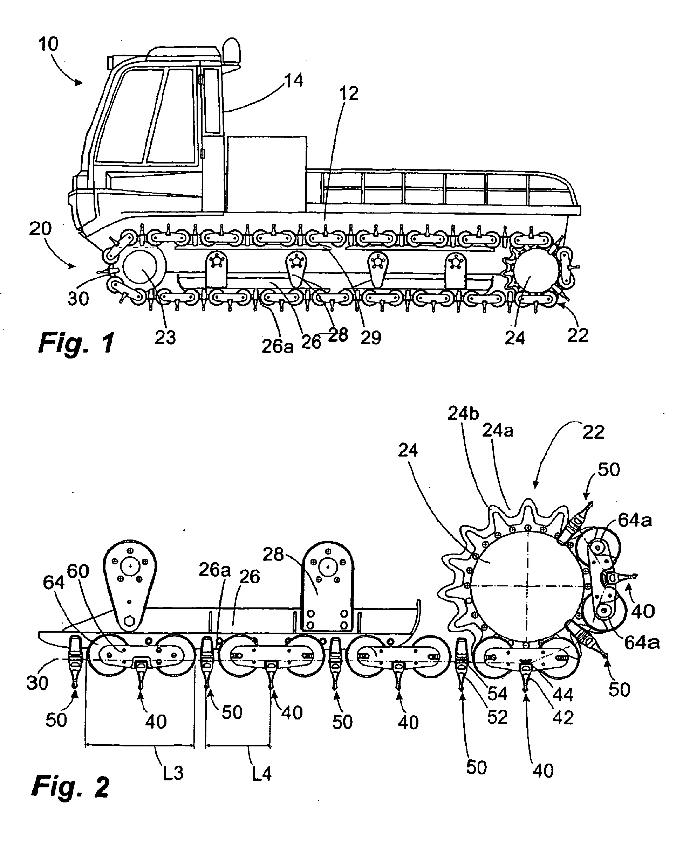

Fig. 1 zeigt ein erfindungsgemäßes Raupenfahrzeug 10. Dieses Raupenfahrzeug 10 weist in üblicher Art und Weise ein Fahrzeugchassis 12 auf, welches auch ein Fahrerhaus 14 umfasst. An einem unteren Teil des Chassis 12 ist ein Kettenlaufwerk 20 mit einer umlaufenden Kette 22 vorgesehen. In nicht dargestellter Art und Weise sind die Komponenten des Kettenlaufwerks 20, die in Fig. 1 für die linke Fahrzeugseite dargestellt sind, in gespiegelter Form auch auf der rechten Fahrzeugseite vorgesehen. Alle im Zusammenhang mit der Erfindung erläuterten Aspekte des Kettenlaufwerks 20 beziehen sich sowohl auf die dargestellte linke Seite als auch auf die nicht dargestellte rechte Seite des Kettenlaufwerks 20.

Das Kettenlaufwerk 20 weist neben der Kette 22 ein frontseitiges Führungsrad 23 sowie ein heckseitiges Antriebsrad 24 auf, wobei das Antriebsrad 24 als Zahnrad ausgebildet ist. Die Kette ist umlaufend um diese Räder 23, 24 herumgelegt. Weiterhin umfasst das Kettenlaufwerk 20 zwei Führungsschienen 26, die mittels Trägern 28 am Chassis 12 befestigt sind. Diese Führungsschienen 26 erstrecken sich in Fahrzeuglängsrichtung und weisen eine Unterseite 26a auf, die in im Weiteren noch beschriebener Art und Weise in Eingriff mit der Kette 22 ist. An den jeweiligen vorderen und hinteren Enden ist die Unterseite 26a der Führungsschienen 26 in verschiedenem Maße nach oben gezogen, um das Einfädeln der Kette 22 zu erleichtern.

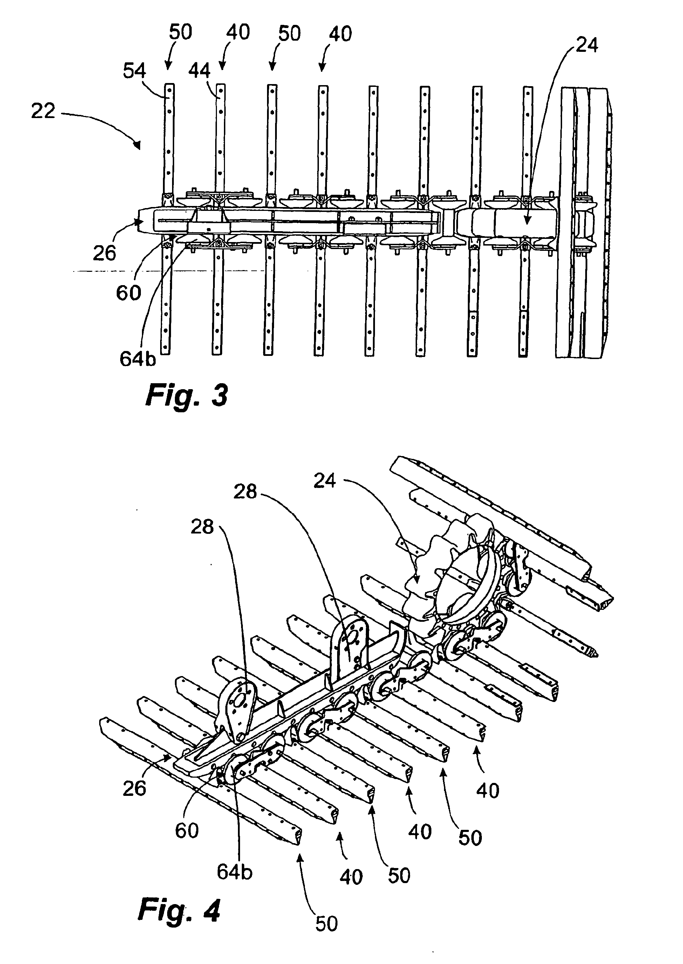

Ein hinterer Teilabschnitt des Kettenlaufwerks 20 ist in den Fig. 2 bis 4 detaillierter dargestellt und wird nachfolgend erläutert.

Die Kette 22 selbst weist ein Kettenband 30 auf, an welchem Kettenstege 40, 50 hintereinander befestigt sind. Die Kettenstege 40, 50 unterteilen sich dabei in Kettenstege 40 einer ersten Art und Kettenstege 50 einer zweiten Art. An der Kette 22 sind diese Kettenstege 40, 50 der ersten und zweiten Art im Wechsel angebracht.

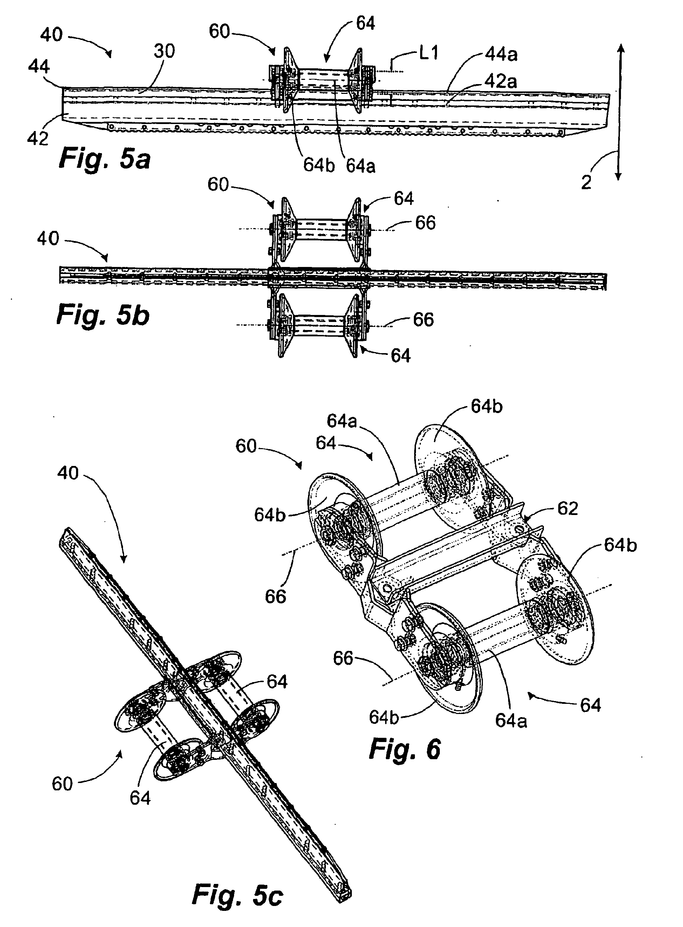

Bezugnehmend auf die detaillierteren Darstellung der Fig. 5 bis 7 weisen die Kettenstege 40, 50 sowohl der ersten als auch der zweiten Art jeweils einen Bodenabschnitt 42, 52 auf, dem jeweils ein Gegenabschnitt 44, 54 zugeordnet ist, wobei die Bodenabschnitte 52, 42 sowie die Gegenabschnitte 54, 44 jeweils mit Bohrungen 52a, 42a, 54a, 44a versehen sind, mittels derer sie an gegenüberliegenden Seiten des Kettenbandes 30 festgeschraubt werden können. Beim vorliegenden Beispiel sind die Bodenabschnitte 42, 52 der Kettenstege 40, 50 der ersten Art und der zweiten Art in Fahrzeugquerrichtung gleich lang und stimmen hinsichtlich ihrer Lage bezogen auf die Fahrzeugquerrichtung überein. Bei alternativen Ausgestaltungen können die Kettenstege jedoch auch variierende Längen haben und/oder bezogen auf die Fahrzeugquerrichtung versetzt zueinander angeordnet sein.

Die Kettenstege 40, 50 der ersten und zweiten Art unterscheiden sich voneinander durch die jeweils vorgesehenen Vorrichtungen zum Wechselwirken mit den Führungsschienen 26.

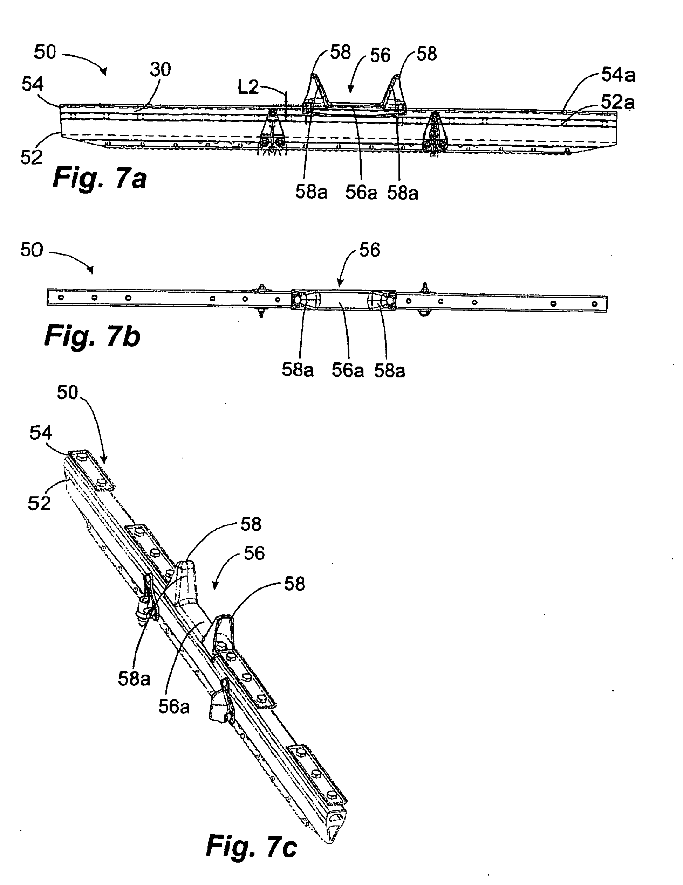

Bei den Kettenstegen 50 der zweiten Art ist am Gegenabschnitt 54 lediglich ein Spurbügel 56 vorgesehen, an dessen Außenseiten zwei Erhebungen 58 vorgesehen sind. Dieser Spurbügel 56 weist eine in der Darstellung der Fig. 7a nach oben weisende Auflagefläche 56a sowie aufeinander zu weisende Stützflächen 58a an den Erhebungen 58 auf. Der Spurbügel 56 ist als starres und in sich unbewegliches Teil vorgesehen.

Bei den Kettenstegen 40 der ersten Art, die in den Fig. 5a bis 5c dargestellt sind, ist statt des Spurbügels 56 eine Tragvorrichtung 60 vorgesehen. Diese Tragvorrichtung 60, die isoliert auch in Fig. 6 dargestellt ist, besteht aus einem in sich starren metallischen Rahmen 62, der aus miteinander verschweißten Blechen zusammengesetzt ist, sowie aus zwei Rollkörpern 64. Diese Rollkörper 64 sind an dem Rahmen 62 drehbar gelagert, wobei die Drehachsen 66 parallel zur Haupterstreckungsrichtung der Bodenabschnitte 42 und somit in Fahrzeugquerrichtung verlaufen. Jeder der Rollkörper 64 weist einen zentralen Auflageabschnitt 64a sowie sich beidseitig daran anschließende Seitenführungsabschnitte 64b auf. Die Seitenführungsabschnitte 64b sind konisch geformt und weisen an ihrem engsten Durchmesser einen mit dem Auflageabschnitt 64a identischen Durchmesser auf. Ausgehend hiervon weiten sich die Auflageabschnitte 64b nach außen konisch auf, so dass sie an ihrem äußeren Rand einen maximalen Durchmesser aufweisen, der etwa dreimal bis viermal so groß ist wie der Durchmesser des Auflageabschnitts 64a.

Wie sich beim Vergleich der Darstellungen der Fig. 5a und 7a ergibt, ist der Abstand L1, um den die Mantelfläche des Auflageabschnitts 64a des Kettenstegs 40 der ersten Art von dem Kettenband 30 in Fahrzeughochrichtung 2 beabstandet ist, größer als der Abstand L2, um den die Auflagefläche 56a des Kettenstegs 50 der zweiten Art vom Kettenband 30 entfernt ist. An einem sich rein horizontal erstreckenden Abschnitt des Kettenbandes 30 überragen die Mantelflächen der Auflageabschnitte 64a der Rollen 64 an den Kettenstegen 40 der ersten Art somit die Auflageflächen 56a an den Kettenstegen 50 der zweiten Art. Die Differenz zwischen L1 und L2 beträgt dabei beim vorliegenden Ausführungsbeispiel 25 mm.

Wiederum bezugnehmend auf die Fig. 2 bis 4 ist ersichtlich, dass die Kettenstege 40, 50 der ersten und der zweiten Art im Wechsel am Kettenband 30 vorgesehen sind. Die Erstreckung L3 der Kettenstege 40 der ersten Art in Richtung des Kettenbandes 30 ist aufgrund der Tragvorrichtungen 60 und der Rollkörper 64 dabei erheblich größer als die Erstreckung der Kettenstege 50 der zweiten Art in Erstreckungsrichtung des Kettenbandes 30 sowie ebenfalls erheblich größer als der Abstand L4 der Kettenstege 40, 50 zueinander.

Es ist ersichtlich, dass demnach unter Beibehaltung des Abstandes L4 der Kettenstege 40, 50 nur die beschriebene alternierende Anordnung gewährleistet, dass die Kettenstege 40, 50 nicht in unmittelbaren Kontakt miteinander gelangen.

Wie bereits beschrieben wurde, liegen die Kettenstege 40 zumindest der ersten Art dann, wenn sie mit ihren Bodenabschnitten 42 in Bodenkontakt sind, an den Führungsschienen 26 an. Im Fahrbetrieb, bei dem es zu einer Relativbewegung zwischen den Kettenstegen 40, 50 und den Führungsschienen 26 kommt, rollen die Rollkörper 64 der Kettenstege 40 an der Führungsschiene 26 ab und verursachen dabei nur geringe Reibungsverluste. Da jeder Kettensteg 40 der ersten Art zwei weit voneinander beabstandete Rollkörper 64 aufweist, ist eine hohe Sicherheit gegen ein Verkippen der Bodenabschnitte 42 um die Fahrzeugquerachse gewährleistet. Gleichzeitig gewährleisten die Seitenführungsabschnitte 64b der Rollkörper 64, dass die Kettenstege 40 in Eingriff mit der Führungsschiene 26 verbleiben und nicht in Fahrzeugquerrichtung ausbrechen. Diese Seitenführungsfunktion geht aufgrund der sich mit den Auflageabschnitten 64a mitdrehenden Seitenführungsabschnitte 64b ebenfalls mit nur geringen Reibungsverlusten einher.

Die zwischen den Kettenstege 40 der ersten Art jeweils angeordneten Kettenstege 50 der zweiten Art gelangen aufgrund der beschriebenen zurückgesetzten Gestaltung der Auflageflächen 56a gegenüber den Auflageabschnitten 64a der Rollkörper 64 entweder nicht in Kontakt mit den Unterseiten 26a der Führungsschienen 26 oder aber in einen Kontakt mit nur geringer Flächenpressung, so dass auch hier die Reibungsverluste gering sind. Durch die Erhebungen 58 an den Spurbügeln 56 sowie die Stützflächen 58a wird auch im Hinblick auf die Kettenstege 50 der zweiten Art eine Seitenführung erzielt.

Aufgrund der großen Beabstandung der Rollkörper 64, die Teil der gemeinsamen Tragvorrichtung 60 eines Kettenstegs 40 der ersten Art sind, können die Rollkörper 64 im Bereich des Antriebsrades 24 nicht in eine gemeinsamen Zahnlücke 24a eintauchen. Die Drehachsen 66 der Rollkörper 64 sind daher voneinander derart beabstandet, dass die Auflageabschnitte 64a der Rollkörper 64 in unterschiedliche Zahnlücken 24a eintauchen, wobei zwischen den beiden Zahnlücken 24a in die die Auflageabschnitte 64a eintauchen, eine Zahnlücke 24a ungenutzt verbleibt oder allenfalls starre Teile des Rahmens 62 der Tragvorrichtung 60 aufnimmt. Zum besseren Verständnis sind der verdeckte Teil des Antriebsrades 24 und die im Eingriff mit dem Antriebsrad 24 befindlichen Auflageabschnitte 64a der Rollkörper 64 in Fig. 2 gestrichelt dargestellt.

Die Rollkörper 64, insbesondere die Auflageabschnitte 64a der Rollkörper 64, stellen die einzigen Teile der Kettenstege 40 erster Art dar, die in Berührkontakt mit dem als Zahnrad ausgebildeten Antriebsrad 24 gelangen. Die Antriebskraft wird somit vollständig über die Rollkörper 64 in die Kette 20 eingeleitet, wobei die drehbare Gestaltung der Rollkörper 64 auch ein begrenztes Abrollen an den Zahnflanken der Zähne 24b des Antriebsrades 24 gestattet.

Neben den Kettenstegen 40 der ersten Art gelangen auch die Kettenstege 50 der zweiten Art in Eingriff mit dem Antriebsrad 24, wobei sie beim Umlauf in Zahnlücken 24a aufgenommen werden, die beidseitig benachbart sind zu anderen Zahnlücken 24a, in die die Rollkörper 64 der jeweils benachbarten Kettenstege 40 der ersten Art eingreifen.

Zusätzlich zu den Führungsschienen 26 sind für den nicht in Bodenkontakt befindlichen Abschnitt der Kette 22 Auflageschienen 29 vorgesehen. Diese in Fig. 1 dargestellten Auflageschienen 29 verhindern ein Durchhängen des Kettenabschnitts und stellen eine in Fahrzeugquerrichtung wirkende Führung für diesen Kettenabschnitt da. Die Kettenstege 40 der ersten Art rollen dabei mittels der Rollkörper 64 auf diesen Auflageschienen 29 ab.

Das in Fig. 1 dargestellte Raupenfahrzeug 10 ist als Pistenpflegefahrzeug ausgebildet. Durch die erfindungsgemäße Gestaltung des Kettenlaufwerks 20 dieses Raupenfahrzeugs 10 wird eine Vielzahl von Effekten erzielt, die sich insbesondere bei der Pistenpflege positiv auswirken. Durch die Gestaltung der Kettenstege 40 der ersten Art und den großen Abstand der Drehachsen 66 wird zuverlässig gewährleistet, dass die Bodenabschnitte 42 dieser Kettenstege 40 senkrecht in der Schneedecke ausgerichtet sind und somit besonders gut die Antriebskraft des Fahrzeuges für den Vortrieb nutzen. Die hohe Stabilität der Kettenstege gestattet es weiterhin, die Kettenstege weit voneinander zu beabstanden, so dass die Schneefläche nur in vergleichsweise geringem Maße verletzt wird und somit der Schlupf stark vermindert wird. Durch die scheibenartig ausgebildeten Seitenführungsabschnitte 64b der Rollkörper 64 ist darüber hinaus in besonders reibungsarmer Art gewährleistet, dass ein seitliches Ausbrechen der Kettenstege 40 der ersten Art nicht stattfindet. Die Anpassung des Abstandes der Drehachsen 66 der Rollkörper 64 voneinander an das Antriebsrad 24 führt dazu, dass der große Abstand der Drehachse 66 am Antriebsrad 24 kein Problem darstellt, sondern es im Gegenteil gestattet, dass die Rollkörper 64 in vorteilhafter Art und Weise zur Kraftübertragung vom Antriebsrad 24 auf die Kette 22 genutzt werden.

## Patentansprüche

1. Raupenfahrzeug (10), insbesondere zum Präparieren von Skipisten, mit einem Kettenantrieb (20) mit zwei in einer Fahrzeugquerrichtung beabstandet angeordneten geschlossenen Ketten (22), die jeweils
- mindestens ein Kettenband (30) aufweisen, an dem eine Vielzahl von Kettenstegen (40, 50) vorgesehen sind und
- an einem ersten Ende um ein Antriebsrad (24) und an einem zweiten Ende um ein Führungsrad (23) geführt sind,
wobei
- an einem Chassis (12) des Raupenfahrzeugs (10) für jede Kette (22) mindestens eine Führungsschiene (26) vorgesehen ist, über die die Gewichtskraft des Raupenfahrzeugs (10) in im Bodenkontakt befindliche Kettenstege (40, 50) der Kette (22) eingeleitet wird, und
- zumindest ein Teil der Kettenstege (40) mit drehbar gelagerten Rollkörpern (64) ausgebildet ist, die zum Abrollen an der Führungsschiene (26) angeordnet und ausgebildet sind,
**dadurch gekennzeichnet, dass**
mindestens ein Kettensteg (40) einer ersten Art und mindestens ein Kettensteg (50) einer zweiten Art vorgesehen sind, wobei der Kettensteg (40) der ersten Art und der Kettensteg (50) der zweiten Art sich voneinander dadurch unterscheiden,
- dass der Kettensteg (40) der ersten Art eine von dem Kettensteg (50) der zweiten Art abweichende Zahl von Rollkörpern (64) mit voneinander beabstandeten Drehachsen (66) aufweist und/oder
- dass der Kettensteg (40) der ersten Art eine Tragvorrichtung (60) mit mindestens zwei Rollkörpern (64) aufweist, die sich in Erstreckungsrichtung der Kette (22) über eine Länge (L3) erstreckt, die größer ist als der Abstand (L4) benachbarter Kettenstege (40, 50) zueinander, wobei der Kettensteg (50) der zweiten Art eine solche Tragvorrichtung (60) nicht aufweist.

2. Raupenfahrzeug nach Anspruch 1,
**dadurch gekennzeichnet, dass**
dass der Kettensteg (50) der zweiten Art keinen Rollkörper aufweist.

3. Raupenfahrzeug nach Anspruch 1 oder 2,
**dadurch gekennzeichnet, dass**
die Kettenstege (40) der ersten Art und die Kettenstege (50) der zweiten Art in einer wiederkehrenden Reihenfolge angeordnet sind, wobei vorzugsweise
- jeweils ein Kettensteg (40) der ersten Art und ein Kettensteg (50) der zweiten Art im Wechsel vorgesehen sind,
- auf jeweils zwei, drei oder vier Kettenstege (40) der ersten Art ein Kettensteg (50) der zweiten Art folgt oder
- auf jeweils zwei, drei oder vier Kettenstege (50) der zweiten Art ein Kettensteg (40) der ersten Art folgt.

4. Raupenfahrzeug nach einem der vorstehenden Ansprüche,
**dadurch gekennzeichnet, dass**
Kontaktbereiche (56a, 64a) an den Kettenstegen (40, 50), die bei Bodenkontakt der Kettenstege (40, 50) in Richtung der Führungsschiene (26) weisen, bei Kettenstegen (40) der ersten Art weiter von dem Kettenband (30) beabstandet sind als bei Kettenstegen (50) der zweiten Art.

5. Raupenfahrzeug nach einem der Ansprüche 1 bis 4,
**dadurch gekennzeichnet, dass**
an den Kettenstegen (50) der zweiten Art Funktionsabschnitte (56, 58) vorgesehen sind,
- die derart ausgebildet und angeordnet sind, dass sie gemeinsam mit der Führungsschiene (26) eine Seitenführung für den jeweiligen Kettensteg (50) bewirken und/oder
- die dafür ausgebildet und angeordnet sind, unterhalb der Führungsschiene (26) an dieser entlang zu gleiten und dabei der Einleitung der Gewichtskraft des Raupenfahrzeugs (10) in die Kette (22) zu dienen.

6. Raupenfahrzeug nach einem der vorstehenden Ansprüche,
**dadurch gekennzeichnet, dass**
an zumindest einem Teil der Kettenstege (40) je Kettensteg (40) mindestens zwei Rollkörper (64) vorgesehen sind, deren Drehachsen (66) voneinander beabstandet sind, wobei der Abstand der Drehachsen (66) derart an den Abstand von Zahnlücken (24a) des Antriebsrades (24) angepasst ist, dass die beiden Rollkörper (64) eines solchen Kettenstegs (40) beim Umlauf des Kettenstegs (40) um das Antriebsrad (24) gleichzeitig in unterschiedlichen Zahnlücken (24a) des Antriebsrades (24) angeordnet sind.

7. Raupenfahrzeug nach Anspruch 6,
**dadurch gekennzeichnet, dass**
die Kettenstege (40) mit drehbar gelagerten Rollkörpern (64) derart gestaltet und auf das Antriebsrad (24) angepasst sind, dass beim Umlauf dieser Kettenstege (40) mit Rollkörpern (64) um das Antriebsrad (24) nur die Rollkörper (64) dieser Kettenstege in Berührkontakt mit dem Antriebsrad (24) gelangen.

8. Raupenfahrzeug nach Anspruch 6 oder 7,
**dadurch gekennzeichnet, dass**
die Kettenstege (40) mit mindestens zwei Rollkörpern (64) von benachbarten Kettenstegen (50) ohne Rollkörper oder mit nur einem Rollkörper derart beabstandet sind, dass neben den beiden Rollkörper (64) beim Umlauf eines Kettenstegs (40) mit mindestens zwei Rollkörpern (64) um das Antriebsrad (24) gleichzeitig auch ein fest an dem benachbarten Kettensteg (50) angeordneter Funktionsabschnitt (56) oder Rollkörper in einer weiteren Zahnlücke (24a) des Antriebsrades (24) angeordnet ist.

9. Raupenfahrzeug nach einem der vorstehenden Ansprüche,
**dadurch gekennzeichnet, dass**
Kettenstege (40) mit einem drehbar gelagerten Auflagerollkörper (64a), der zum Abrollen an einer Unterseite (26a) der Führungsschienen (26) vorgesehen ist, zusätzliche Seitenführungsrollkörper (64b) aufweisen, die bei Kontakt des jeweiligen Auflagerollkörpers (64a) mit der Führungsschiene (26) seitlich der Führungsschiene (26) angeordnet sind und als Seitenführungsmittel der Kette (22) wirken.

10. Raupenfahrzeug nach Anspruch 9,
**dadurch gekennzeichnet, dass**
die Seitenführungsrollkörper (64b) um eine in Fahrzeugquerrichtung ausgerichtete Drehachse (66) drehbar am jeweiligen Kettensteg (40) gelagert sind, wobei vorzugsweise der zwischen den Seitenführungsrollkörpern (64b) angeordnete Auflagerollkörper (64a) mit gegenüber den Seitenführungskörpern (64b) verringertem Durchmesser um dieselbe Drehachse (66) drehbar ist.

11. Raupenfahrzeug nach Anspruch 10,
**dadurch gekennzeichnet, dass**
die Seitenführungsrollkörper (64b) und der Auflagerollkörper (64a) drehfest miteinander verbunden sind, wobei vorzugsweise die Seitenführungsrollkörper (64b) und der Auflagerollkörper (64a) als einheitlicher Führungs- und Auflagerollkörper (64) mit variierendem Durchmesser ausgebildet sind.

12. Raupenfahrzeug nach einem der vorstehenden Ansprüche,
**dadurch gekennzeichnet, dass**
benachbarte Kettenstege (40, 50) um eine Länge (L4) von mindestens 200mm voneinander beabstandet sind.

## Claims

1. Tracked vehicle (10), in particular for grooming ski pistes, having a track drive (20) with two closed tracks (22) arranged spaced apart in a vehicle transverse direction, each
- having at least one track belt (30) on which a plurality of grousers (40, 50) are provided and
- being passed at a first end around a drive wheel (24) and at a second end around a guide wheel (23),
where
- on a chassis (12) of the tracked vehicle (10), at least one guide rail (26) is provided for each track (22), via which rail the weight of the tracked vehicle (10) is transmitted into grousers (40, 50) of the track (22) which are in ground contact, and
- at least some of the grousers (40) are designed with rotatably mounted roller elements (64) arranged and designed for rolling contact with the guide rail (26),
**characterized in that**
at least one grouser (40) of a first type and at least one grouser (50) of a second type are provided, where the grouser (40) of the first type and the grouser (50) of the second type differ **in that**
- the grouser (40) of the first type has a number differing from that for the grouser (50) of the second type of roller elements (64) with rotary axes (66) spaced apart from one another and/or
- the grouser (40) of the first type has a carrier device (60) with at least two roller elements (64) which extends in the extension direction of the track (22) over a length (L3) which is greater than the spacing (L4) of adjacent grousers (40, 50) from one another, the grouser (50) of the second type having no such carrier device (60).

2. Tracked vehicle according to Claim 1,
**characterized in that**
the grouser (50) of the second type has no roller element.

3. Tracked vehicle according to Claim 1 or 2,
**characterized in that**
the grousers (40) of the first type and the grousers (50) of the second type are arranged in a recurring sequence, where preferably
- one grouser (40) of the first type and one grouser (50) of the second type are provided alternatingly,
- a grouser (50) of the second type follows each two, three or four grousers (40) of the first type, or
- a grouser (40) of the first type follows each two, three or four grousers (50) of the second type.

4. Tracked vehicle according to one of the preceding claims,
**characterized in that**
contact areas (56a, 64a) on the grousers (40, 50) which face in the direction of the guide rail (26) during ground contact of the grousers (40, 50) are further apart from the track belt (30) in the case of grousers (40) of the first type than in the case of grousers (50) of the second type.

5. Tracked vehicle according to one of Claims 1 to 4,
**characterized in that**
function sections (56, 58) are provided on the grousers (50) of the second type,
- which are designed and arranged such that they achieve lateral guidance for the respective grouser (50) together with the guide rail (26) and/or
- which are designed and arranged to glide underneath and along the guide rail (26) while serving to transmit the weight of the tracked vehicle (10) into the track (22).

6. Tracked vehicle according to one of the preceding claims,
**characterized in that**
on at least some of the grousers (40) at least two roller elements (64) are provided per grouser (40) of which the rotary axes (66) are spaced apart from one another, with the spacing of the rotary axes (66) being adapted to the spacing of tooth spaces (24a) of the drive wheel (24) such that the two roller elements (64) of such a grouser (40) are simultaneously arranged in different tooth spaces (24a) of the drive wheel (24) during movement of the grouser (40 around the drive wheel (24).

7. Tracked vehicle according to Claim 6,
**characterized in that**
the grousers (40) are designed with rotatably mounted roller elements (64) and are adapted to the drive wheel (24) such that during movement of these grousers (40) with roller elements (64) around the drive wheel (24) only the roller elements (64) of these grousers come into touching contact with the drive wheel (24).

8. Tracked vehicle according to Claim 6 or 7,
**characterized in that**
the grousers (40) with at least two roller elements (64) are spaced apart from adjacent grousers (50) without roller elements or with only one roller element such that in addition to the two roller elements (64), during movement of a grouser (40) with at least two roller elements (64) around the drive wheel (24), at the same time a function section (56) permanently arranged on the adjacent grouser (50) or a roller element is arranged in a further tooth space (24a) of the drive wheel (24).

9. Tracked vehicle according to one of the preceding claims,
**characterized in that**
grousers (40) with a rotatably mounted contact roller element (64a) provided for rolling contact with an underside (26a) of the guide rails (26) have additional lateral guidance roller elements (64b) which during contact of the respective contact roller element (64a) with the guide rail (26) are arranged at the side of the guide rail (26) and act as lateral guidance means of the track (22).

10. Tracked vehicle according to Claim 9,
**characterized in that**
the lateral guidance roller elements (64b) are mounted rotatably about a rotary axis (66) aligned in the vehicle transverse direction, where the contact roller element (64a) arranged between the lateral guidance roller elements (64b) is preferably rotatable about the same rotary axis (66) with a diameter reduced relative to that of the lateral guidance elements (64b).

11. Tracked vehicle according to Claim 10,
**characterized in that**
the lateral guidance roller elements (64b) and the contact roller element (64a) are non-rotatably connected to one another, where the lateral guidance roller elements (64b) and the contact roller element (64a) are preferably designed as a uniform guidance and contact roller element (64) with varying diameter.

12. Tracked vehicle according to one of the preceding claims,
**characterized in that**
adjacent grousers (40, 50) are spaced apart from one another by a length (L4) of at least 200 mm.

## Revendications

1. Véhicule chenillé (10), en particulier pour préparer des pistes de ski, muni d'un entraînement par chenilles (20) avec deux chenilles fermées (22) distantes l'une de l'autre dans un sens transversal du véhicule, qui respectivement
- présentent au moins une bande de patins (30) sur laquelle est prévue une pluralité de crampons (40, 50) et
- passent à une première extrémité autour d'une roue menante (24) et à une seconde extrémité autour d'une roue guidante (23),
sachant
- que sur un châssis (12) du véhicule chenillé (10) est prévue pour chaque chenille (22) au moins une barre de guidage (26) par l'intermédiaire de laquelle le poids du véhicule chenillé (10) est transmis aux crampons (40, 50) de la chenille (22) qui sont en contact avec le sol, et
- qu'au moins une partie des crampons (40) est conçue avec des galets (64) logés de manière pivotante qui sont disposés et conçus pour rouler sur la barre de guidage (26),
**caractérisé en ce**
**que** sont prévus au moins un crampon (40) d'un premier type et au moins un crampon (50) d'un second type, le crampon (40) du premier type et le crampon (50) du second type se distinguant l'un de l'autre en ce
- **que** le crampon (40) du premier type présente un nombre de galets (64) différent de celui du crampon (50) du second type, avec des axes de rotation (66) distants les uns des autres et/ou
- **que** le crampon (40) du premier type présente un dispositif porteur (60) pourvu d'au moins deux galets (64) et qui, dans la direction d'extension de la chenille (22), s'étend sur une longueur (L3) qui est supérieure à la distance (L4) entre deux crampons voisins (40, 50), le crampon (50) du second type ne présentant pas un tel dispositif porteur (60).

2. Véhicule chenillé selon la revendication 1,
**caractérisé en ce**
**que** le crampon (50) du second type ne présente pas de galet.

3. Véhicule chenillé selon la revendication 1 ou 2,
**caractérisé en ce**
**que** les crampons (40) du premier type et les crampons (50) du second type sont disposés en ordre itératif, sachant que de préférence
- un crampon (40) du premier type et un crampon (50) du second type sont respectivement prévus en alternance,
- à respectivement deux, trois ou quatre crampons (40) du premier type succède un crampon (50) du second type ou
- à respectivement deux, trois ou quatre crampons (50) du second type succède un crampon (40) du premier type.

4. Véhicule chenillé selon l'une des revendications précédentes,
**caractérisé en ce**
**que** les zones de contact (56a, 64a) sur les crampons (40, 50) qui, lors du contact avec le sol des crampons (40, 50) sont orientés en direction de la barre de guidage (26), sont plus éloignées de la bande de patins (30) pour les crampons (40) du premier type que pour les crampons (50) du second type.

5. Véhicule chenillé selon l'une des revendications 1 à 4,
**caractérisé en ce**
**que** sur les crampons (50) du second type sont prévues des sections fonctionnelles (56, 58),
- qui sont conçues et disposées de telle sorte qu'elles constituent, conjointement avec la barre de guidage (26), un guidage latéral pour le crampon (50) concerné et/ou
- qui sont conçues et disposées pour glisser sous la barre de guidage (26) et le long de celle-ci et, ce faisant, pour servir à transmettre le poids du véhicule chenillé (10) dans la chenille (22).

6. Véhicule chenillé selon l'une des revendications précédentes,
**caractérisé en ce**
**que** pour au moins une partie des crampons (40) sont prévus par crampon (40) au moins deux galets (64) dont les axes de rotation (66) sont distants l'un de l'autre, sachant que la distance entre les axes de rotation (66) est adaptée à la distance entre les entredents (24a) de la roue menante (24) de manière telle que lors du passage du crampon (40) sur la roue menante (24), les deux galets (64) d'un tel crampon (40) sont simultanément placés dans des entredents (24a) distincts de la roue menante (24).

7. Véhicule chenillé selon la revendication 6,
**caractérisé en ce**
**que** les crampons (40) avec galets (64) logés de manière pivotante sont conçus et adaptés à la roue menante (24) de manière telle que lors du passage de ces crampons (40) avec galets (64) sur la roue menante (24), seuls les galets (64) de ces crampons entrent en contact avec la roue menante (24).

8. Véhicule chenillé selon la revendication 6 ou 7,
**caractérisé en ce**
**que** les crampons (40) avec au moins deux galets (64) sont distants de crampons (50) voisins sans galet ou avec seulement un galet de manière telle que lors du passage d'un crampon (40) avec au moins deux galets (64) sur la roue menante (24), outre les deux galets (64), une section fonctionnelle (56) ou un galet disposé(e) fixement sur le crampon (50) voisin est aussi placé(e) simultanément dans un autre entredent (24a) de la roue menante (24).

9. Véhicule chenillé selon l'une des revendications précédentes,
**caractérisé en ce**
**que** les crampons (40) avec un galet d'appui (64a) logé de manière pivotante, prévu pour rouler sur une face inférieure (26a) de la barre de guidage (26), présentent des galets de guidage latéral (64b) supplémentaires qui, lors du contact du galet d'appui (64a) avec la barre de guidage (26), sont disposés latéralement par rapport à la barre de guidage (26) et agissent en tant que moyen de guidage latéral de la chenille (22).

10. Véhicule chenillé selon la revendication 9,
**caractérisé en ce**
**que** les galets de guidage latéral (64b) sont logés sur les crampons (40) respectifs de manière à pouvoir pivoter autour d'un axe de rotation (66) orienté dans le sens transversal du véhicule, sachant que de préférence le galet d'appui (64a), disposé entre les galets de guidage latéral (64b) et ayant un diamètre inférieur à celui des galets de guidage latéral (64b), peut pivoter autour du même axe de rotation (66).

11. Véhicule chenillé selon la revendication 10,
**caractérisé en ce**
**que** les galets de guidage latéral (64b) et le galet d'appui (64a) sont reliés entre eux de manière solidaire en rotation, sachant que de préférence les galets de guidage latéral (64b) et le galet d'appui (64a) sont conçus en tant qu'unique galet de guidage et d'appui (64) avec diamètre non constant.

12. Véhicule chenillé selon l'une des revendications précédentes,
**caractérisé en ce**
**que** la distance (L4) entre des crampons voisins (40, 50) est au moins égale à 200 mm.
